# EUROPEAN PATENT APPLICATION

(11) **EP 3 361 645 A1**
(43) Date of publication of application: **15.08.2018**
(21) Application number: 17155582.4
(22) Date of filing: 10.02.2017
(51) Int. Cl.: H04B 5/00

(54) **DELAYED POWER TRANSFER IN A WIRELESS POWER TRANSFER SYSTEM**

(71) Applicant: Koninklijke Philips N.V., 5656 AE Eindhoven (NL)
(72) Inventor: Staring, Antonius Adriaan Maria, 5656 AE Eindhoven (NL); Van Wageningen, Andries, 5656 AE Eindhoven (NL)
(74) Representative: de Haan, Poul Erik

(57) **Abstract**

A wireless inductive power transfer system comprises and a power transfer apparatus capable of providing power to power receivers. The power transmission apparatus comprises a first receiver (601) for receiving a first power receiver identifier and a request for delayed power transfer for a first power receiver. A power transfer controller (605) can generate a wireless inductive wake-up signal at a requested time for the delayed power transfer. A second receiver (603) receives a second power receiver identifier from a second power receiver receiving the wake-up signal; and a processor (609) is arranged to reject (or proceed with) the delayed power transfer in response to a comparison of the first power receiver identifier and the second power receiver identifier. Specifically, the delayed power transfer is initialized if the second power receiver identifier matches the first power receiver identifier.

## Description

### FIELD OF THE INVENTION

The invention relates to delayed power transfer in a wireless inductive power transfer system and in particular, but not exclusively, to a power transmitter providing inductive power transfer using elements compatible with the Qi Specifications for wireless power transfer systems.

### BACKGROUND OF THE INVENTION

Most present-day systems require a dedicated electrical contact in order to be powered from an external power supply. However, this tends to be impractical and requires the user to physically insert connectors or otherwise establish a physical electrical contact. Typically, power requirements also differ significantly, and currently most devices are provided with their own dedicated power supply resulting in a typical user having a large number of different power supplies with each power supply being dedicated to a specific device. Although, the use of internal batteries may avoid the need for a wired connection to a power supply during use, this only provides a partial solution as the batteries will need recharging (or replacing). The use of batteries may also add substantially to the weight and potentially cost and size of the devices.

In order to provide a significantly improved user experience, it has been proposed to use a wireless power supply wherein power is inductively transferred from a transmitter inductor in a power transmitter device to a receiver coil in the individual devices.

Power transmission via magnetic induction is a well-known concept, mostly applied in transformers having a tight coupling between a primary transmitter inductor and a secondary receiver coil. By separating the primary transmitter inductor and the secondary receiver coil between two devices, wireless power transfer between these becomes possible based on the principle of a loosely coupled transformer.

Such an arrangement allows a wireless power transfer to the device without requiring any wires or physical electrical connections to be made. Indeed, it may simply allow a device to be placed adjacent to, or on top of, the transmitter inductor in order to be recharged or powered externally. For example, power transmitter devices may be arranged with a horizontal surface on which a device can simply be placed in order to be powered.

Furthermore, such wireless power transfer arrangements may advantageously be designed such that the power transmitter device can be used with a range of power receiver devices. In particular, a wireless power transfer approach known as the Qi Specifications has been defined and is currently being developed further. This approach allows power transmitter devices that meet the Qi Specifications to be used with power receiver devices that also meet the Qi Specifications without these having to be from the same manufacturer or having to be dedicated to each other. The Qi standard further includes some functionality for allowing the operation to be adapted to the specific power receiver device (e.g. dependent on the specific power drain).

The Qi Specification is developed by the Wireless Power Consortium and more information can e.g. be found on their website: http://www.wirelesspowerconsortium.com/index.html, where in particular the defined Specification documents can be found.

A particular feature that could be imagined for wireless power transfer systems is delayed power transfer wherein the request is that a power transfer is performed at a future time. The request may for example request that the power transfer is provided at a specific future time or after a specific delay from the current time.

The support of such operations may provide increased flexibility and may e.g. provide new user services and functions. For example, a wirelessly powered coffee maker may be placed on a wireless power transmitter in the evening with a request for power transfer to occur at a certain time the next morning. At the appropriate time, the power transmitter may initiate a power transfer resulting in the coffee maker making a fresh cup of coffee at the desired time.

However, it is currently not clear how such an operation can effectively be supported such that reliable, safe, and efficient operation can be achieved.

Hence, an improved power transfer approach would be advantageous. In particular, an approach that allows improved operation, improved power transfer, increased flexibility, facilitated implementation, facilitated operation, improved/ efficient support for delayed power transfer, improved user functionality, and/or improved performance would be advantageous.

### SUMMARY OF THE INVENTION

Accordingly, the Invention seeks to preferably mitigate, alleviate or eliminate one or more of the above mentioned disadvantages singly or in any combination.

According to an aspect of the invention there is provided a power transmission apparatus for a wireless inductive power transfer system comprising: a first receiver for receiving a first power receiver identifier and a request for delayed power transfer for a first power receiver; a store for storing the first power receiver identifier; a power transfer controller arranged to generate a wireless inductive wake-up signal at a requested time for the delayed power transfer; a second receiver for receiving a second power receiver identifier from a second power receiver receiving the wake-up signal; and a processor for rejecting the delayed power transfer in response to a comparison of the first power receiver identifier and the second power receiver identifier.

The invention may allow improved operation and performance in many wireless power transfer systems. It may provide additional or improved user services in many embodiments. Specifically, the approach may in many systems provide an improved and more reliable support for delayed power transfers wherein a power transfer is requested for a future time. The approach may typically provide improved robustness to changes and unexpected user behavior. It may for example allow increased freedom for a user to move appliances and devices comprising power receivers for which delayed power transfers have been setup.

The approach may specifically provide an approach for ensuring that the power receiver present at the time of the delayed power transfer is indeed the power receiver for which the delayed power transfer has been requested. The system may achieve this by including an approach that detects whether the second power receiver is the same as the first power receiver.

The first receiver may in many embodiments be arranged to receive the first power receiver identifier and/or the request for the delayed power transfer from the first power receiver. However, in some embodiments the first power receiver identifier and/or the request for the delayed power transfer may be received from another source, such as a remote source coupled to the power transmission apparatus via a network, or indeed from an internal source of the power transmission apparatus (such as e.g. a user interface).

The power transmission apparatus may comprise functionality for generating a wireless inductive power transfer signal for wirelessly providing power to power receivers, and specifically to the second power receiver during the delayed power transfer. The power transmission apparatus may specifically comprise a transmitter coil for generating the power transfer signal.

The second power receiver may specifically be at least partly powered by the wake-up signal. The wake-up signal may be a power signal for powering at least part of the functionality of the second power receiver. Specifically, the wake-up signal may be able to power a communication functionality of the second power receiver. The wake-up signal may in many embodiments be a communication signal supporting communication between the power transmission apparatus and the second power receiver. Specifically, the wake-up signal may be a communication carrier supporting communication between the power transmission apparatus and the second power receiver by modulation of the wake-up signal.

The processor may be arranged to reject or accept the delayed power transfer in response to the comparison of the first power receiver identifier and the second power receiver identifier

The processor may be arranged to reject the delayed power transfer in response to detecting that a second power receiver identifier has not been received which matches the first power receiver identifier. The processor may be arranged to accept the delayed power transfer in response to detecting that a second power receiver identifier has been received which matches the first power receiver identifier.

The rejection of the delayed power transfer may include or correspond to a rejection of one or more parameters stored for the delayed power transfer, including a parameter specifying an operation of the power receiver. In some scenarios, the rejection of a delayed power transfer may correspond to a cancellation of the delayed power transfer.

In accordance with an optional feature of the invention, the power transmission further comprises a transmitter for transmitting a match indication to the second power receiver in response to the controller detecting a match between the first power receiver identifier and the second power receiver identifier.

This may provide advantageous operation in many embodiments and scenarios. It may in particular allow the power receiver to control the operation and initialization of power transfers. The approach may allow compatibility with specifications, standards, and protocols wherein the power receiver is in control of setting up power transfers.

In accordance with an optional feature of the invention, the power transmission apparatus further comprises a presence detector arranged to invalidate the stored first power receiver identifier in response to a detection of a removal of the first power receiver from a power transfer position.

This may provide more robust performance and/or increased user flexibility in many embodiments and scenarios. The invalidation of the stored first power receiver identifier may e.g. be by deleting or changing the stored first power receiver identifier or may e.g. be by setting a flag or setting other data accordingly. For example, the invalidation may be by resetting a flag indicating that a delayed power transfer is pending. The invalidation of the stored first power receiver identifier may specifically be by cancelling the delayed power transfer.

A power transfer position may be a position (or area) at which a power receiver should be placed to be supported and receive power from the power transmitter.

In accordance with an optional feature of the invention, the presence detector is arranged to invalidate the stored first power receiver identifier only if the first power receiver is absent for more than a first time interval.

This may provide increased flexibility for the user behavior and provide an improved user experience.

In accordance with an optional feature of the invention, the wireless power transfer apparatus is arranged to perform a power transfer operation for another power receiver during the first time interval.

This may provide increased flexibility for the user behavior and provide an improved user experience. For example, it may allow a power transmitter to temporarily support another power receiver without this affecting the delayed power transfer for the first power receiver as long as this is returned before the end of the first time interval.

The wireless power transfer apparatus is arranged to perform a power transfer operation for another power receiver which is not the power receiver for which the delayed power transfer has been requested.

In accordance with an optional feature of the invention, the presence detector is arranged to repeatedly generate a detection signal and to determine that the first power receiver is present at the power transfer position in response to a detection that a power receiver identifier received in response to the detection signal matches the first power receiver identifier.

This may provide particularly efficient, robust, and/or reliable performance. The detection signal may specifically be a wake-up signal that wakes up at least the communication functionality of the power receiver.

In accordance with an optional feature of the invention, the first receiver is arranged to receive power transfer parameters for the delayed power transfer; the store is arranged to store the power transfer parameters; and the power transmission apparatus further comprises a transmitter for transmitting the power transfer parameters to the second power receiver in response to the processor detecting a match between the first power receiver identifier and the second power receiver identifier

This may provide particularly advantageous performance in many embodiments. It may for example allow robust delayed power transfer operation without having to require the associated power receiver to be able to store any information when not being powered.

In accordance with an optional feature of the invention, the first receiver is arranged to receive the first power receiver identifier and the request for the delayed power transfer from the first power receiver.

This may provide particularly advantageous performance in many embodiments.

In accordance with an optional feature of the invention, the wireless inductive power transfer apparatus is a wireless power transmitter.

This may provide particularly advantageous performance in many embodiments.

According to an aspect of the invention there is provided a power receiver for a wireless power transfer system, the power receiver comprising: a power up controller arranged to power up the power receiver in response to a wake-up signal from a power transmitter; a receiver for receiving a power receiver indication from the power transmitter, the power receiver indication being indicative of a stored power receiver identifier for a delayed power transfer; a power transfer initializer for initializing the delayed power transfer in response to the power receiver indication being indicative of the stored power receiver identifier matching a power receiver identifier for the power receiver.

The approach may allow improved operation and performance in many wireless power transfer systems.

In accordance with an optional feature of the invention, the power receiver further comprises a store and the power transfer controller is arranged to store power transfer parameters for the delayed power transfer in the store; and the power transfer initializer is arranged to retrieve the stored power transfer parameters and to initialize the delayed power transfer using the retrieved stored power transfer parameters if the power receiver indication is indicative of the stored power receiver identifier matching a power receiver identifier for the power receiver.

This may provide particularly advantageous performance in many embodiments.

In accordance with an optional feature of the invention, the power transfer initializer is arranged to initialize a power transfer not using the stored power transfer parameters if no power receiver indication indicative of the stored power receiver identifier matching the power receiver identifier for the power receiver is received.

This may provide particularly advantageous performance in many embodiments.

According to an aspect of the invention there is provided a wireless inductive power transfer system comprising a first power receiver and a power transfer apparatus comprising: a first receiver for receiving a first power receiver identifier and a request for delayed power transfer for a first power receiver, a store for storing the first power receiver identifier, and a power transfer controller arranged to generate a wireless inductive wake-up signal at a requested time for the delayed power transfer; and the wireless inductive power transfer system comprises: a second receiver for receiving a second power receiver identifier from a second power receiver receiving the wake-up signal; and a processor for rejecting the delayed power transfer in response to a comparison of the first power receiver identifier and the second power receiver identifier.

According to an aspect of the invention there is provided a method of operation for a power transmission apparatus of a wireless inductive power transfer system, the method comprising: receiving a first power receiver identifier and a request for delayed power transfer for a first power receiver; storing the first power receiver identifier; generating a wireless inductive wake-up signal at a requested time for the delayed power transfer; receiving a second power receiver identifier from a second power receiver receiving the wake-up signal; and rejecting the delayed power transfer in response to a comparison of the first power receiver identifier and the second power receiver identifier.

According to an aspect of the invention there is provided a method of operation for power receiver of a wireless power transfer system, the method comprising: powering up the power receiver in response to a wake-up signal from a power transmitter;
receiving a power receiver indication from the power transmitter, the power receiver indication being indicative of a stored power receiver identifier for a delayed power transfer; initializing the delayed power transfer in response to the power receiver indication being indicative of the stored power receiver identifier matching a power receiver identifier for the power receiver.

These and other aspects, features and advantages of the invention will be apparent from and elucidated with reference to the embodiment(s) described hereinafter.

### BRIEF DESCRIPTION OF THE DRAWINGS

Embodiments of the invention will be described, by way of example only, with reference to the drawings, in which
FIG. 1 illustrates an example of elements of a power transfer system in accordance with some embodiments of the invention;
FIG. 2 illustrates an example of elements of a power transmitter in accordance with some embodiments of the invention;
FIG. 3 illustrates an example of elements of a half-bridge inverter for a power transmitter in accordance with some embodiments of the invention;
FIG. 4 illustrates an example of elements of a full-bridge inverter for a power transmitter in accordance with some embodiments of the invention;
FIG. 5 illustrates an example of elements of a power receiver in accordance with some embodiments of the invention;
FIG. 6 illustrates an example of elements of a power transmission apparatus in accordance with some embodiments of the invention;
FIG. 7 illustrates an example of steps of a method of operation for a power transmission apparatus in accordance with some embodiments of the invention;
FIG. 8 illustrates an example of elements of a power transmission apparatus in accordance with some embodiments of the invention; and
FIG. 9 illustrates an example of steps of a method of operation for a power transmission apparatus in accordance with some embodiments of the invention.

### DETAILED DESCRIPTION OF THE EMBODIMENTS

The following description focuses on embodiments of the invention applicable to a wireless power transfer system utilizing a power transfer approach such as known from the Qi specification. However, it will be appreciated that the invention is not limited to this application but may be applied to many other wireless power transfer systems.

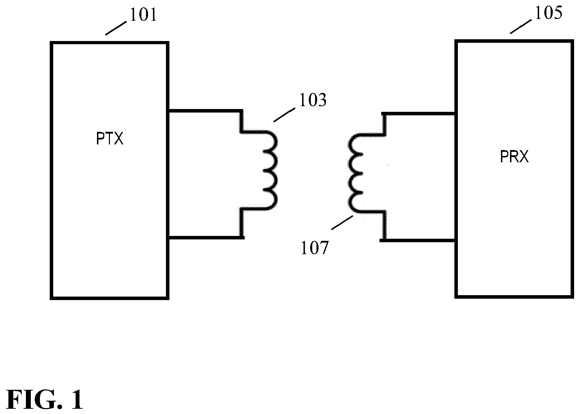

FIG. 1 illustrates an example of a power transfer system in accordance with some embodiments of the invention. The power transfer system comprises a power transmitter 101 which includes (or is coupled to) a transmitter coil / inductor 103. The system further comprises a power receiver 105 which includes (or is coupled to) a receiver coil/ inductor 107.

The system provides a wireless inductive power transfer from the power transmitter 101 to the power receiver 105. Specifically, the power transmitter 101 generates a wireless inductive power transfer signal (also referred to as a power transfer signal, power transfer signal or an inductive power transfer signal), which is propagated as a magnetic flux by the transmitter coil or inductor 103. The power transfer signal may typically have a frequency between around 20 kHz to around 500 kHz, and often for Qi compatible systems typically in the range from 95 kHz to 205 kHz (or e.g. for high power kitchen applications, the frequency may e.g. typically be in the range between 20kHz to 80kHz). The transmitter coil 103 and the power receiving coil 107 are loosely coupled and thus the power receiving coil 107 picks up (at least part of) the power transfer signal from the power transmitter 101. Thus, the power is transferred from the power transmitter 101 to the power receiver 105 via a wireless inductive coupling from the transmitter coil 103 to the power receiving coil 107. The term power transfer signal is mainly used to refer to the inductive signal/ magnetic field between the transmitter coil 103 and the power receiving coil 107 (the magnetic flux signal), but it will be appreciated that by equivalence it may also be considered and used as a reference to an electrical signal provided to the transmitter coil 103 or picked up by the power receiving coil 107.

In the example, the power receiver 105 specifically receives power via a receive coil 107. However, in other embodiments, the power receiver 105 may comprise a metallic element, such as a metallic heating element, in which case the power transfer signal induces eddy currents resulting in a direct heating of the element.

The system is arranged to transfer substantial power levels, and specifically the power transmitter may support power levels in excess of 500mW, 1W, 5W, 50W, 100W or 500W in many embodiments. For example, for Qi corresponding applications, the power transfers may typically be in the 1-5W power range for low power applications, and in excess of 100 W and up to more than 1000W for high power applications, such as e.g. kitchen applications.

In the following, the operation of the power transmitter 101 and the power receiver 105 will be described with specific reference to an embodiment in accordance with the Qi Specification (except for the herein described (or consequential) modifications and enhancements) or suitable for the higher power kitchen specification being developed by the Wireless Power Consortium. In particular, the power transmitter 101 and the power receiver 105 may follow, or substantially be compatible with, elements of the Qi Specification version 1.0, 1.1 or 1.2 (except for the herein described (or consequential) modifications and enhancements).

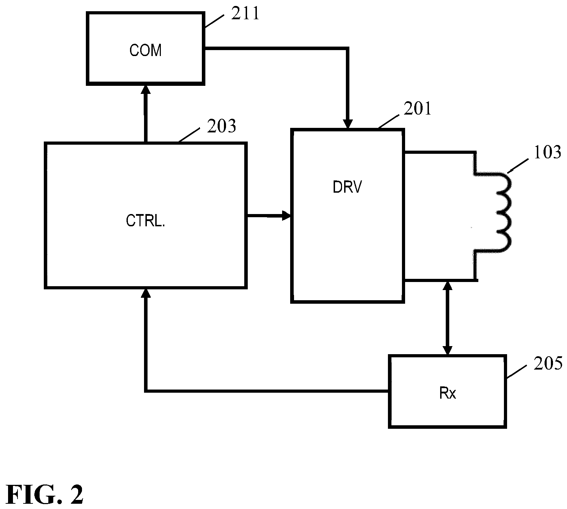

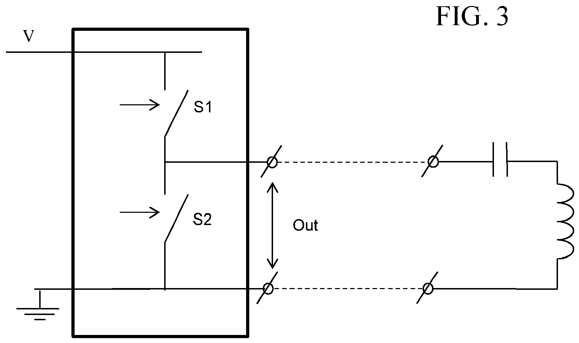

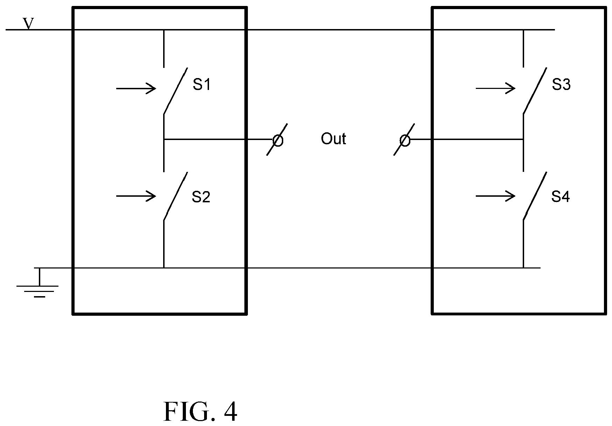

FIG. 2 illustrates an example of elements of the power transmitter 101 of FIG. 1 in more detail. The transmitter coil 103 is coupled to a driver 201 which generates a drive signal for the transmitter coil 103. The driver 201 generates the current and voltage signal which is fed to the transmitter inductor 103. The driver 201 is typically a drive circuit in the form of an inverter which generates an alternating signal from a DC Voltage. The output of the driver 201 is typically a switch bridge generating the drive signal by the appropriate switching of switches of the switch bridge. FIG. 3 shows a half-bridge switch bridge/ inverter. The switches S1 and S2 are controlled such that they are never closed at the same time. Alternatingly S1 is closed while S2 is open and S2 is closed while S1 is open. The switches are opened and closed with the desired frequency, thereby generating an alternating signal at the output. Typically, the output of the inverter is connected to the transmitter inductor via a resonance capacitor. FIG. 4 shows a full-bridge switch bridge/ inverter. The switches S1 and S2 are controlled such that they are never closed at the same time. The switches S3 and S4 are controlled such that they are never closed at the same time. Alternatingly switches S1 and S4 are closed while S2 and S3 are open, and then S2 and S3 are closed while S1 and S4 or open, thereby creating a square-wave signal at the output. The switches are open and closed with the desired frequency.

The driver 201 is coupled to a power transmitter controller 203 which is arranged to control the operation of the power transmitter 101. The power transmitter controller 203 maybe arranged to control the operation of the power transmitter 101 to perform the required and desired functions associated with power transfer protocols of the system, and may specifically in the present example be arranged to control the power transmitter 101 to operate in accordance with the Qi Specifications. For example, the power transmitter controller 203 may comprise functionality for detecting a power receiver, for initiation power transfer, for supporting power transfer, for terminating power transfer etc.

In the example, the power transmitter 101 further comprises a message receiver 205 which is arranged to receive messages from the power receiver 105. The message receiver 205 may specifically be arranged to decode the load modulation of the power transfer signal as will be known to the skilled person, e.g. from the Qi power transfer specifications.

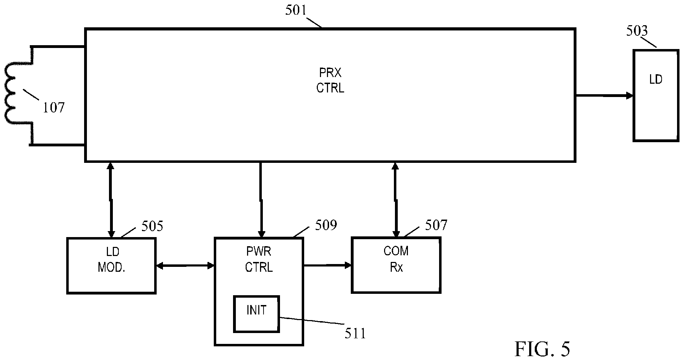

FIG. 5 illustrates an example of some elements of the power receiver 105 in more detail. In the example, the receiver coil 107 is coupled to a power receiver controller 501 which couples the receiver coil 107 to a load 503. The power receiver controller 501 includes a power control path which converts the power extracted by the receiver coil 107 into a suitable supply for the load. In addition, the power receiver controller 301 may include various power receiver control functionality required to perform power transfer, and in particular functions required to perform power transfer in accordance with the Qi Specifications.

In order to support communication from the power receiver 105 to the power transmitter 101 the power receiver 105 comprises a load modulator 505. The load modulator 505 is arranged to vary the loading of the receiver coil 107 in response to data to be transmitted to the power transmitter 101. The load variations are then detected and demodulated by the power transmitter 101 as will be known to the person skilled in the art.

The power receiver 105 includes a communication receiver 507 which is arranged to receive data from the power transmitter 101. The data may be transmitted by the power transmitter 101 modulating the power transfer signal, e.g. by applying frequency or phase modulation, which may be detected, demodulated, and decoded as appropriate by the communication receiver 507. It will be appreciated that any suitable means of communicating data from the power transmitter 101 to the power receiver 105 (or indeed from the power receiver 105 to the power transmitter 101) may be used without subtracting from the invention, including e.g. using standardized dedicated short range communication approaches, such as e.g. Near Field Communication (NFC).

The power receiver 105 further comprises a power transfer controller 509 which is arranged to control high level aspects of the power transfer operation of the power receiver 105, such as initializing, suspending, terminating, pausing etc power transfer operations. The power transfer controller 509 is coupled to the power controller 501, the load modulator 505, and the communication receiver 507 and is arranged to interface with these to control the power receiver 105 to perform the appropriate actions including performing the necessary communication with the power transmitter 101.

A specific feature proposed for wireless power transfer systems such as that of FIG. 1 is the option of a delayed power transfer where a power transfer is requested in advance of the time that the power transfer should take place. For example, the power receiver 105 may be placed at a power transfer position for the power transmitter 101 and may transmit a request to the power transmitter 101 to initiate a power transfer at a future time.

The time for the start of the delayed power transfer may be specified as an absolute time (e.g. tomorrow at 7AM) or as a relative time (e.g. seven hours from now). It will also be appreciated that the delay interval (the time from the request until the start of the power transfer) may have any suitable duration, but is typically no less than 1, 5, 10 or 15 minutes. The duration may in many scenarios exceed e.g. 1, 2, or 4 hours.

The request for a delayed power transfer may be achieved by the power receiver transmitting a message to the power transmitter specifying the time for the power transmitter to initialize the power transfer.

For a delayed power transfer, the request for a power transfer may accordingly be significantly in advance of the time at which this should take place. During the delay interval, the power receiver powers down and the power transmitter does not provide a power (or at least not full power). Accordingly, the delay interval will also be referred to as the power down interval (or equivalently a standby interval).

During the power down interval, the power transmitter enters a low power standby operating mode. This is not only desirable from the user perspective but is also needed to meet regulatory requirements in many countries. In practice, this typically means that an implementation should be able to achieve a stand-by power consumption of less than 1 W.

A power transmitter may be able to enter a standby mode for other purposes, such as due to the power transmitter not detecting a power receiver/ power transmitter or that a power receiver/ appliance is detected but that this has not requested power for some time. These situations may occur for extended periods of time, and it is therefore important that the power during the standby operation is kept very low. Accordingly, whereas the power transmitter may intermittently generate a power transfer signal during short time intervals to check whether a power receiver is indeed present, it will not provide continuous power to any power receiver that may be present. Therefore, during a standby scenario, such as during the power down interval of a delayed power transfer, the power receiver does not receive any power from the power transmitter. Typically, the (average) power provided to the power receiver during a power down or standby interval is no more than 1W, or in some cases no more than 500mW or even 200mW.

This provides various challenges for the system in order to support delayed power transfer functionality. Indeed, it requires the system to be able to differentiate between different situations, and specifically the power transmitter and power receiver must be able to differentiate between a scenario where a new power transfer operation is initiated and a scenario where a delayed power transfer operation is initiated.

For example, if a power transmitter after a power down interval powers up in order to start a delayed power transfer, it must be able to ensure that this is still a valid operation and that the current scenario/ conditions are appropriate for the delayed power transfer. For example, it must ensure that the intended power receiver is indeed still there and ready to receive power.

The situation may further be particularly challenging for a power receiver as this may receive no power during the power down interval and therefore may be switched completely off. When the power receiver wakes up after a power down interval, it will need to determine whether this is a valid continuation of a delayed power transfer or whether e.g. it is a new situation.

Indeed, in many cases where the power receiver does not receive any power during a power down interval, it may not be able to rely on local parameters. Therefore, the power receiver may not even have any knowledge of whether it is being powered as part of a delayed power transfer operation or whether it is a normal (non-delayed) power transfer operation that is potentially starting (e.g. whether the power receiver wakes up simply because it has been positioned on a (new) power transmitter).

Indeed, even if the power receiver is capable of locally storing power transfer parameters for the delayed power transfer during the power down interval (e.g. in non-volatile memory), such parameters cannot readily be retrieved and applied as it cannot be guaranteed that the current power transfer initialization is part of the corresponding delayed power transfer operation and is not due to e.g. the power receiver being moved to a new power transmitter.

In more detail, when the power transmitter enters standby operation, the power receiver may typically lose all power. An appliance that requests a delayed power transfer therefore needs to have a way to prevent losing its settings.

As an example, it may be imagined that a power receiver in the form of a kitchen appliance may store its settings in non-volatile memory to ensure that it is not lost during the standby operation of the power transmitter. It may store a flag indicating whether the stored data is valid or not. The appliance may set the flag when it has requested the power transmitter to delay the start of the power transfer and it may reset the flag when that is not the case. Thus, the flag may effectively indicate whether a delayed power transfer has been requested or not and whether suitable parameters have been stored for the delayed power transfer. When the appliance is again provided with power, the appliance can check the flag to determine whether it should resume normal operation (and e.g. wait for user input), or whether a delayed power transfer has been requested and it should therefore continue using the stored settings.

However, a problem with this approach is that the situation may have changed since the delayed power transfer was requested and the power transmitter entered the standby phase. For example, a user may remove the appliance from the power transmitter-e.g. forgetting about having programmed the appliance to wake up after some time- and store it in a cabinet. When the user then puts the appliance back on the power transmitter at a later time (after the time that the delayed power transfer should have occurred), the appliance will when being powered up evaluate the stored flag and determine that a delayed power transfer is being initiated. It will then retrieve the settings stored in its non-volatile memory and proceed to use these for the following operation -for example, a coffee maker will automatically begin to brew coffee. This unexpected behavior is undesirable and indeed can startle the user, and potentially even lead to unsafe situations.

It could be imagined that such a scenario could be addressed by implementing time limited memory in the appliance. For example, the appliance could store the parameter settings in volatile memory being powered using a sufficiently large capacitor. To avoid that this capacitor is drained below a critical level required for reliably retaining the settings in the memory, the appliance must recharge the capacitor at regular time intervals and this can be done by the power transmitter briefly generating a power transfer signal during the power down interval. Accordingly, the power down interval will be split into many short delays, continually cycling between standby and active states in which power can be provided to the appliance. Obviously, this approach results in increased power consumption. Another drawback is the added cost of the capacitor.

Assuming that the memory is reliably cleared to zero when the capacitor is completely drained, (which will be the case e.g. if the user removes the appliance and stores it in a cabinet) then this could address the above-mentioned problem. In such a case, the flag will automatically be cleared if the appliance is moved from the power transmitter for long enough for the capacitor to be fully discharged, and therefore the appliance will start normally when it is next provided with power.

However, typically, it cannot be guaranteed that the memory will revert to a specific state, and if the memory comes up in an undefined state after the complete loss of power, the problem still exists. Worse, it has become unpredictable whether the appliance will start normally or whether it will start to operate from undefined settings found in the memory.

Another disadvantage of this alternative possibility is that the settings will also be lost if the appliance is temporarily removed from the power transmitter but returned before the end of the power down interval, i.e. in time for the delayed power transfer to be successfully performed. An example of this scenario is that a user has programmed the appliance for a delayed started of the power transfer but then during the power down interval moves the appliance a little to the side for a few minutes (or say ten to twenty minutes) to make space on the countertop for other activities, and finally moves it back in place. If in this scenario, the user moves the appliance too far off the power transmitter, it may not be possible to continue cycling between stand-by and active states, thus draining the capacitor that keeps the memory powered during stand-by. For how long a user can move the appliance aside before it loses its settings depends on e.g. the capacitor size and the amount of power required to keep the memory from losing its information, and again this results in unpredictable behavior.

Thus, such approaches will typically result in an unreliable system where the performance of the power receiver/ appliance cannot be predicted.

In the following, an approach will be described for the wireless power transfer system of FIG. 1 which provides an efficient and reliable support for delayed power transfer.

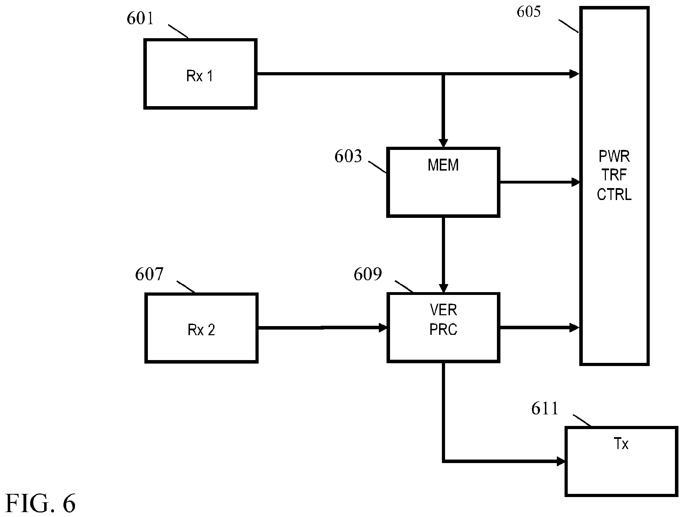

FIG. 6 illustrates elements of a power transmission apparatus for the wireless inductive power transfer system of FIG. 1. The apparatus is arranged to support delayed power transfer functionality in a power transfer system such as a Qi power transfer system. The apparatus may in some embodiments be part of the power transmitter 101, or may e.g. be part of device comprising a plurality of power transmitters including the power transmitter 101 of FIG. 1.

The apparatus may be arranged to generate a power transfer signal for wirelessly transferring power to one or more power receiver. In many embodiments, the power transmission apparatus will accordingly include a transmitter coil 103 such as described with respect to FIG. 1 and 2. The power transmission apparatus is thus provided on the power providing side rather than at the power receiving side of a wireless power transfer. In many embodiments, the elements described with reference to FIG. 2 may also be part of the power transmission apparatus.

The power transmission apparatus comprises a first receiver 601 which is arranged to receive a first power receiver identifier and a request for a delayed power transfer for a first power receiver. The power receiver identifier and the request for the delayed power transfer may typically be received directly from the first power receiver but could in some embodiments and scenarios be received from other sources.

The first receiver 601 is coupled to a store 603 in which the first power receiver identifier is stored. The store 603 is arranged to store the first power receiver identifier during the power down interval, and may for example be non-volatile memory. In scenarios where the store 603 is part of the power transmitter, this may be arranged to maintain the data in the store by powering this during the power down interval even if the store 603 is implemented as volatile memory. As the power required for this is typically very low, it will typically not be a problem to do this while achieving a sufficiently low standby power for the power transmitter.

The request for the delayed power transfer will include an indication of a time for the power transfer to occur. The time may be a relative time or an absolute time. The first receiver 601 is coupled to a power transfer controller 605 which is arranged to manage and control the initialization of the delayed power transfer. Specifically, the power transfer controller 605 is arranged to control the power transmitter 101 to initialize the delayed power transfer by generating a wake-up signal at a requested time for the delayed power transfer. Specifically, the power transfer controller 605 may keep track of the current time and check whether the requested time for the delayed power transfer has been reached and when this is the case it may proceed to generate a wireless inductive wake-up signal.

The wake-up signal is a signal that can be received by the power receiver and will result in this waking up from the powered down mode. In some embodiments, the wake-up signal may be the power transfer signal, i.e. the power transfer controller 605 may set a control signal or send a control message to the power transmitter controller 605 that requests it to control the driver 201 to generate a power transfer signal. In response to the presence of the power transfer signal, the power receiver will start to be powered up and will proceed to start to communicate with the power transmitter to initialize a power transfer.

However, in many embodiments, the wake-up signal may be different from the power transfer signal. Indeed, in many embodiments, the wake-up signal may be a communication signal which specifically may be arranged to both provide some power to the power receiver as well as to provide a means of communication between the power transmitter and the power receiver.

An advantage of such an approach is that the power requirements may be reduced. Specifically, the wake-up signal may be a low power signal which by the power receiver will be used to power only a small part of the power receiver. Typically, the wake-up signal will be a low power signal that can power communication functionality at the power receiver such that the power transmitter and power receiver can begin to exchange information relating to the initialization of a power transfer. If this communication is successful, the system may proceed to a phase wherein the power transfer signal is generated to provide more power to the power receiver.

The wake-up signal may in many embodiments also provide the basis for the communication between the power transmitter and the power receiver. For example, the wake-up signal may be a communication carrier which e.g. can be modulated by the power transmitter and/or the power receiver (e.g. by load modulation).

As a specific example, the power transmitter/power transmission apparatus and the power receiver may (at least initially) communicate based on an NFC short range communication protocol. In such an example, the wake-up signal may be an NFC carrier. The NFC carrier may provide both a carrier for the communication and power the NFC functionality of the power receiver.

As part of the initial communication process, the power receiver may specifically provide a power receiver identifier to the power transmitter and this may be used to control the operation of the system as will be described in more detail. In some embodiments, it may alternatively or additionally be the power transmitter which communicates identifier information to the power receiver. Such communication exchange may typically be performed before the power transfer signal is initialized and the power receiver is fully switched on. Indeed, the system may only proceed to this phase if the initial communication exchange leads to a successful conclusion of the start of the power transfer initialization process.

It will be appreciated that the power transfer controller 605 is typically part of the power transmitter 101, and indeed may often be considered to be part of the power transmitter controller.

Thus, at the end of the power down interval, the power transmission apparatus will control the power transmitter 101 to generate a wake-up signal resulting in any power receiver at a power transfer position for the power transmitter 101 being provided with a wake-up signal (which typically may also provide some power).

In response to receiving/ detecting such a wake-up signal, the power receiver will wake-up and typically begin to communicate with the power transmission apparatus in order to potentially initialize a new power transfer. If this initial communication exchange is satisfactory, the system may proceed to initialize a power transfer in accordance with the specifications for e.g. Qi.

However, a key issue is in such a situation whether the power transfer being to setup is indeed the delayed power transfer operation or whether it is a new power transfer operation. Specifically, from the view of the power transmitter 101, it needs to be confirmed that the power receiver currently in place is indeed the appropriate power receiver for which the delayed power transfer was requested.

Similarly, when a power receiver experiences a wake-up signal after having been powered down, it needs to determine whether this corresponds to the initialization of a previously requested delayed power transfer or not. In case the power receiver is capable of storing data indicating that a requested delayed power transfer is pending, it still needs to verify that the current wake-up signal is indeed generated in support of the previously requested delayed power transfer and not due to e.g. a normal operation when a power receiver is placed on a power transmitter (e.g. due to the power receiver being moved to a different power transmitter and/or being absent from the first power transmitter 101 at the time of the delayed power transfer). In case, the power receiver does not include functionality for storing information relating to delayed power transfers during standby/ power down operation, it always needs to determine whether a given new power up is due to a delayed power transfer or not.

The apparatus comprises a second receiver 607 which is arranged to receive a second power receiver identifier from the power receiver being powered by the wake-up signal. The power receiver for which the delayed power transfer is setup will be referred to as the first power receiver and the power receiver being present when the power transmitter generates the wake-up signal initializing the delayed power transfer will be referred to as the second power receiver. In order for it to be appropriate to continue with the delayed power transfer, the second power receiver should indeed be the first power receiver, i.e. it should be the power receiver for which the delayed power transfer was set up.

It will be understood that the first receiver 601 and the second receiver 607 may of course be the same physical implementation, i.e. the references to the first receiver 601 may be to a receiver of the power transmission apparatus when receiving a request for a delayed power transfer/ when receiving the first power receiver identifier, and the references to the second receiver 607 may be to the same receiver when the power transmission apparatus seeks to setup the delayed power transfer /when receiving the second power receiver identifier.

It will be appreciated that different approaches may be used to ensure that the second power receiver identifier is received from the power receiver currently receiving (and typically being powered by) the wake-up signal. In many embodiments, this may for example be achieved by the second receiver 607 being arranged to receive the second power receiver identifier by demodulation of modulation of the wake-up signal, such as specifically by demodulating a load modulation of the wake-up signal. The power receiver may accordingly communicate the second power receiver identifier by load modulating the wake-up signal and the second receiver 607 may be arranged to demodulate this load modulation to recover the data representing the second power receiver identifier. In many embodiments, a short range communication link maybe used, such as e.g. an NFC communication link.

In some embodiments, power receivers may e.g. be arranged to transmit power receiver identifiers in response to the detection of a wake-up signal, e.g. using a message that is only transmitted when a new wake-up signal is detected, and thus the second receiver 607 can ensure that the received second power receiver identifier is one that is received in response to the wake-up signal being generated.

It will be appreciated that in many embodiments, the same functionality may implement the first receiver 601 and the second receiver 607, for example the same circuit may be used to demodulate load modulation of the wake-up signal to receive both the first power receiver identifier and the second power receiver identifier.

The power transmission apparatus further comprises a verification processor 609 which is coupled to the second receiver 607 and the store 603. The verification processor 609 is arranged to retrieve the stored first power receiver identifier and to compare this to the received second power receiver identifier. The verification processor 609 may then be arranged to potentially reject the delayed power transfer in response to the comparison. Specifically, if the comparison indicates that the second power receiver identifier matches the first power receiver identifier, the verification processor 609 may allow the delayed power transfer to proceed whereas if the comparison indicates that the second power receiver identifier does not match the first power receiver identifier, then the verification processor 609 may proceed to reject the delayed power transfer.

The rejection of the delayed power transfer may in some embodiments correspond to a complete termination or cancelling of any power transfer between the power transmitter and the power receiver currently in the power receiving position. However, in many embodiments, the rejection may be a termination of only the requested delayed power transfer while another power transfer may be set up. Specifically, the rejection of the requested delayed power transfer may simply be the verification processor 609 controlling the operation such that a power transfer does not use stored power transfer parameters for the delayed power transfer but e.g. allows new parameters to be determined and used. Thus, specifically the rejection of the delayed power transfer may be achieved by discarding one or more parameters determined for/ associated with the delayed power transfer.

Thus, depending on the determination by the verification processor 609, the system may either proceed to a power transfer initialization phase (e.g. in accordance with the Qi specifications) using parameters for the delayed power transfer or proceed to a power transfer initialization phase not using parameters for the delayed power transfer (and e.g. new parameters may be determined as part of a negotiation phase).

In some embodiments, the verification processor 609 may be arranged to terminate the delayed power transfer by e.g. controlling the power transfer controller 605 to terminate the power transfer initialization, e.g. by this controlling the driver 201 to switch off the wake-up signal and enter the standby mode again rather than switch on the power transfer signal.

In some embodiments, the apparatus may further comprise a transmitter 611 which is arranged to transmit a message to the power receiver currently receiving (and potentially being powered by) the wake-up signal. In the case of the comparison by the verification processor 609 indicating that the second power receiver identifier does match the first power receiver identifier (and thus indicating that the second power receiver is indeed identical to the first power receiver), the transmitter 611 may transmit a match indication to the power receiver. The match indication may accordingly indicate that the current power receiver identifier matches the one stored for the delayed power transfer and that accordingly the delayed power transfer can proceed. In response, the power receiver may proceed to initialize the delayed power transfer, e.g. by using stored power transfer parameters for the delayed power transfer and starting the desired operation associated with the delayed power transfer (e.g. starting the brewing of coffee).

In contrast, if the second power receiver identifier does not match the first power receiver identifier for the delayed power transfer, the verification processor 609 may control the transmitter 611 to transmit a negative match indication. When the power receiver receives a negative match indication, it may proceed to discard any stored parameters and proceed to instead initialize a completely new power transfer operation without using any parameters or performing any functions that are linked to any delayed power transfer operation.

The communication of the positive or negative match indication may specifically be by use of the wake-up signal, for example an NFC communication using a wake-up signal in the form of an NFC carrier may be used.

In some embodiments, the transmitter 611 may only transmit a message in case the comparison indicates that the second power receiver identifier matches the first power receiver identifier, i.e. only a potential positive match indication may be transmitted. In such embodiments, the absence of a positive match indication being received may be considered to correspond to negative match indication and the procedure disclosed above may accordingly be used when no messages are received.

Thus, in some embodiments, the verification processor 609 may be arranged to terminate the delayed power transfer by controlling the communication of messages to the power receiver in response to the comparison. The control maybe such that the power receiver terminates the delayed power transfer unless a positive match indication is received from the apparatus.

The wireless inductive power transfer system of FIG. 1 may accordingly comprise functionality for supporting delayed power transfers. The system may specifically include functionality in the infrastructure or power transmitter side that can ensure that a delayed power transfer only proceeds if appropriate. Specifically, when a power transmitter exits the standby mode and generates a wake-up signal to initialize the delayed power transfer, the power transmission apparatus may verify that the delayed power transfer should proceed and that it is indeed the correct power receiver which is present. Further, the power transmission apparatus may in many embodiments control power receivers to perform either a delayed power transfer or a normal power transfer as appropriate. Indeed, this can be achieved without relying on the power receiver to have any stored information or knowledge of the delayed power transfer, or indeed whether a delayed power transfer has been scheduled for the power receiver or not.

The approach may further allow reliable delayed power transfer services which for example are robust to a power receiver being removed, being replaced by another power receiver, being operational after a cancelled or missed delayed power transfer etc.

It will be appreciated that the functional entities of the power transmission apparatus of FIG. 6 may be located and distributed in different devices and different elements of the power transfer system in different embodiments.

In particular, in some embodiments, the apparatus of FIG. 6 may be implemented in the power transmitter 101, i.e. all the functional blocks may be implemented in a single power transmitter.

For example, the first and second receiver 601, 607 may be implemented by the receiver 205, the transmitter 611 may be implemented by the communicator 201, the store 603, verification processor 609, and power transfer controller 605 may be implemented as part of the power transmitter controller 201. This may in particular be the case where the receiver 205 and the transmitter 611 use short range communication, such as NFC.

Thus, in some embodiments, a delayed power transfer may be setup by the power transmitter receiving the request for the delayed power transfer. This request can include the time for the delayed power transfer to take place. In addition, the power transmitter receives a power receiver identifier which is stored by the power transmitter.

The power transmitter may then enter a power down mode wherein e.g. no power transfer signal is generated. The power receiver may accordingly also power down.

The power transmitter may then keep track of the timing for the delayed power transfer and at the end of the power down interval (i.e. when the power transmitter determines that the time of the delayed power transfer has arrived), it proceeds to generate a wake-up signal.

If a power receiver is present, the generated wake-up signal will result in the initialization of a setup of a communication exchange. Specifically, in response to the wake-up signal, the power receiver transmits a power receiver identifier to the power transmitter. Thus, when the delayed power transfer is requested, the power transmitter receives a first power receiver identifier and when the delayed power transfer is later initialized it receives a second power receiver identifier. The power transmitter then determines whether these match each other. If so, it is confirmed that the current scenario is as expected for the delayed power transfer and accordingly this can go ahead (specifically the power receiver for which the delayed power transfer was set up is present). The power transmitter may specifically inform the power receiver that the delayed power transfer can go ahead and the power receiver may proceed to initialize the delayed power transfer and perform the associated operation (e.g. make coffee), for example using the Qi specifications for setting up a power transfer.

However, if the power transmitter determines that the two identifiers do not match, this indicates that the scenario does not correspond to that expected for the delayed power transfer. Accordingly, the delayed power transfer is rejected and specifically terminated. For example, the power transmitter may transmit a delayed power transfer denial message to the power receiver and this may accordingly proceed to not initialize a delayed power transfer but e.g. instead initialize a normal power transfer operation (e.g. proceeding to determine new power transfer parameters rather than used stored parameters for the delayed power transfer).

Thus, when a power transmitter wakes up to perform a delayed power transfer, different scenarios may exist: the power receiver of the delayed power transfer may be present and ready to perform the delayed power transfer, a different power receiver may be present, or no power receiver may be present. The approach may ensure that the delayed power transfer does not go ahead in the last two scenarios.

It will be appreciated that in some embodiments, the scenario may also occur that the power receiver of the delayed power transfer may be present but not be ready to perform the delayed power transfer. For example, a user may have locally cancelled the required operation (e.g. a manual switch that cancels the automatic making of coffee may have been activated during the power receiver being powered down). In such cases, the power receiver may be arranged to not transmit the second power receiver identifier, or to transmit a modified one, in order to prevent that the delayed power transfer goes ahead. The power receiver may specifically be arranged to cancel the delayed power transfer by sending an appropriate message, or appropriate messages.

When a power receiver wakes up due to receiving/ detecting a wake-up signal, different scenarios may also exist: the powering up may be due to a delayed power transfer being initialized, or the powering up may be due to the power receiver being positioned on a different power transmitter (or on the same power transmitter but not at a time of the delayed power transfer). The described approach further allows for the delayed power transfer to only go ahead in the first case.

It will be appreciated that the power receiver identifiers may be any suitable identifier that may directly or indirectly identify the corresponding power receiver. For example, in many embodiments, the power receiver identifiers may directly be a unique identity permanently allocated to the power receiver. For example, in some embodiments, all power receivers may at manufacturing be allocated a permanent and unique identity. The power receiver identifiers transmitted to the power transmission apparatus may in some embodiments be such permanent and unique identifiers.

In other embodiments, the power receiver identifiers may be temporary identifiers which e.g. may specifically be generated for the purpose of controlling a delayed power transfer. For example, when requesting a delayed power transfer, a power receiver may generate a random code which is used as the first power receiver identifier. This code may further be stored in non-volatile memory of the power receiver and be retransmitted when powered up after the power down interval. The power transmitter may store this code as the first power receiver identifier in the store 603 and compare it to the received second power receiver identifier. A new code may be generated for each delayed power transfer.

Thus, in some embodiments, the power receiver identifiers may be temporary identifiers identifying a specific delayed power transfer (an identifier being indicative of a specific delayed power transfer will also be an identifier of the power receiver for which this delayed power transfer is set up).

A particular issue for supporting delayed power transfers in a wireless power transfer system is how to ensure that the delayed power transfer is performed using the correct power transfer parameters. Especially, it is important that functionality is in place which allows a power receiver to use power transfer parameters previously setup for a delayed power transfer when this is initialized after the power down interval. It is equally important that power transfer parameters previously setup are not accidentally used for a power transfer which is not the delayed power transfer (e.g. if this is missed). The issue may be particularly challenging as the power receiver may be completely powered down during the power down interval.

Power transfer parameters may be any parameters associated with the delayed power transfer or the operation of the power transmitter or power receiver in connection with the delayed power transfer. For example, the delayed power transfer power transfers may include parameters indicative of a power level for the power transfer signal, a frequency, a communication protocol, a specific operation to be performed during the power transfer (such as e.g. brew coffee) etc.

In some embodiments, the first power receiver identifier may also be arranged to receive power transfer parameters for the delayed power transfer and these may be stored in the store 603. When the power transmitter then generates the wake-up signal to initialize the delayed power transfer, the transmitter 611 may transmit the stored power transfer parameters to the power receiver if it is determined that the second power receiver identifier indeed matches the first power receiver identifier.

Thus, in some embodiments, the power transmitter may be arranged to store the power transfer parameters during the power down interval and these may then be provided to the power receiver during the initialization of the delayed power transfer if it is verified that the current power transfer being setup indeed corresponds to the delayed power transfer, i.e. if the current power receiver is indeed the one for which the delayed power transfer was requested. In this way, the power receiver can automatically be provided with information on whether a delayed power transfer is being setup as well as the appropriate parameters to use. Further, this can be achieved without requiring the power receiver to store any information or data relating to the delayed power transfer. The power receiver may simply wake up and use the nominal standard parameters and process for setting up a power transfer unless a message is received from the power transmitter (e.g. during the negotiation phase) providing power transfer parameters stored for a delayed power transfer. In this case, the power receiver may proceed to apply these parameters thereby setting up the delayed power transfer.

In such embodiments, the transmission of power transfer parameters to the power receiver may in itself be considered an indication of a match between the first power receiver identifier and the second power receiver identifier.

The approach may provide a reliable support for the delayed power transfer wherein the power receiver may automatically adapt to proceed with a standard power transfer setup or with a predetermined delayed power transfer as appropriate. Further, this may be achieved without the power receiver needing to store any data or information during the power down interval.

In some embodiments, the power receiver may be arranged to store power transfer parameters for the delayed power transfer locally. Thus, the power receiver may comprise a store in which power transfer parameters are stored when the delayed power transfer is requested. The store may specifically be non-volatile memory which retains the data during power down.

In such embodiments, the power receiver may in response to receiving a wake-up signal wake up and retrieve stored parameters. However, even if it is found that the store does indeed comprise power transfer parameters for a delayed power transfer, these are not directly used. Rather, the power receiver awaits the receipt of an indication that the current scenario corresponds to the delayed power transfer. Thus, following the sending of a power receiver identifier to the power transmitter, it awaits to receive a match indication. If this is received within a given duration, it will apply the retrieved and previously stored power transfer parameters, and thus proceed to setup the delayed power transfer. Otherwise, it may proceed to perform a conventional power transfer setup including the negotiation of new parameters.

Thus, in such embodiments, the power transmitter may perform a check to see if the current situation corresponds to the delayed power transfer and if so it may provide an indication or flag that the power receiver should use the stored power transfer parameters for the delayed power transfer rather than set up a new power transfer (including setting up/ negotiating new parameters).

The approach may thus allow the power transmitter to control whether the power receiver proceeds to initialize a power transfer corresponding to the delayed power transfer or whether it proceeds to initialize a power transfer that does not use (at least all of) the power transfer parameters stored for the delayed power transfer. In particular, in the latter case, the power receiver may proceed to perform a conventional power transfer setup including e.g. negotiating parameters with the power transmitter, interfacing with the user etc. Further, if a positive match indication is received, the power receiver appliance may proceed to perform a specific function automatically (e.g. brew coffee) which it will not do if such a match indication is not received.

As a specific example, the described approaches may for example provide a more robust support for delayed power transfers for a kitchen appliance, such as a coffee maker. Specifically, the approach may avoid the necessity of the appliance itself keeping track of whether a delayed power transfer is pending and instead rely on the power transmitter to do so. The latter will typically stay powered during stand-by-albeit at a low level-and therefore should not have difficulty retaining this information. The power transmitter may at the end of the power down interval (e.g. when an internal time has run down) generate a wake-up signal. If this does not result in the expected response from the appliance, it may proceed to discard or invalidate the delayed power transfer information. For example, a flag indicating that a delayed power transfer is pending may be reset (the flag could indeed be the stored first power receiver identifier itself).

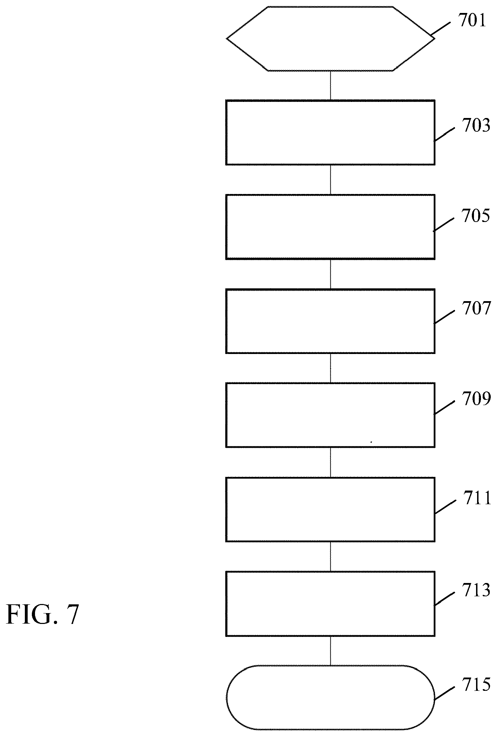

An example of the approach is exemplified in the flow chart of FIG. 7. The flow chart illustrates steps involved with a delayed start of the power transfer in the case that a user places an appliance on the power transmitter, sets it up for a delayed power transfer, and then does not remove the appliance until the delayed power transfer has run its course.

Step 701 occurs when the appliance and power transmitter first start to communicate. As part of the configuration phase, the appliance sends a unique identifier (UID, the first power receiver identifier) to the power transmitter. The power transmitter uses this UID to recognize the appliance later on.

Step 703 occurs after the user has set up the appliance for a delayed power transfer (e.g. make coffee in the morning). The appliance stores the settings involved with the delayed power transfer in local non-volatile memory (NVM) or sends these to the power transmitter for storage and later retrieval. It then in step 705 sends a request to the power transmitter to delay initiating the power transfer phase. This message can specify a delay (relative to the current time) or an absolute time at which the power transfer should be started.

In step 707, the power transmitter associates a timer with the appliance's UID and starts the countdown. Note that instead of performing a countdown, the power transmitter can calculate the absolute time for starting the power transfer and then trigger when the actual time is equal to the calculated time. In the case of a long delay, the power transmitter will typically go into a low-power standby mode to conserve energy. In this standby mode, the countdown is still running. Moreover, the appliance's UID and (optional) stored settings remain in the power transmitter's memory.

When it is time to start the delayed power transfer, the power transmitter, in step 709, wakes up from the standby phase, generates a wake-up signal, and starts communication with the appliance to initialize a power transfer. In the configuration phase of this power transfer setup/ initialization, the power transmitter compares the UID now received from the appliance (i.e. the second power receiver identifier) with the stored UID (i.e. the first power receiver identifier). If these match, the power transmitter in step 711 informs the appliance that a delayed power transfer is ready to start. In step 713, the appliance uses this information to retrieve the settings from its local NVM or receive them from the power transmitter. In the latter case, the appliance and power transmitter does so by exchanging a few more messages. Once the appliance has applied the settings, the process proceeds to step 715 wherein the appliance requests the power transmitter to start the delayed power transfer.

In some embodiments, the power transmission apparatus may be arranged to invalidate a stored first power receiver identifier. The invalidation may specifically invalidate the first power receiver identifier from being used to confirm that a delayed power transfer can go ahead.

For example, in some embodiments, the first power receiver identifier may be deleted from the store or other data or information may be modified to indicate the first power receiver identifier is no longer associated with a pending delayed power transfer. Thus, the invalidation of the first power receiver identifier maybe considered to correspond to a cancellation or invalidation of a pending delayed power transfer.

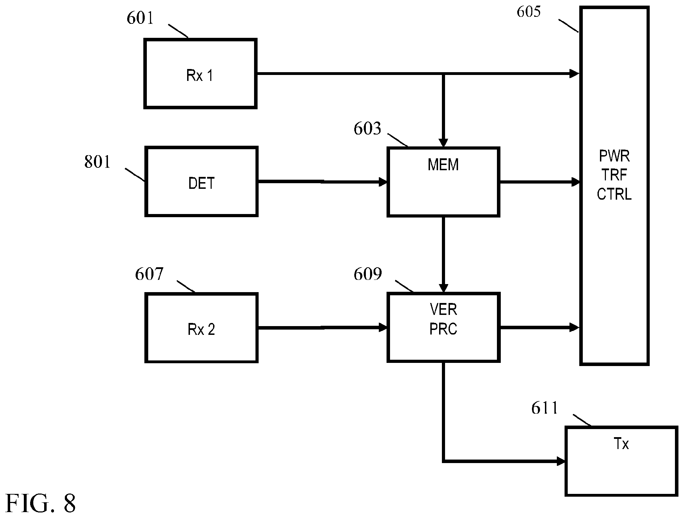

In particular, as illustrated in FIG. 8, the power transmission apparatus may further comprise a presence detector 801 which is arranged to invalidate the stored first power receiver identifier in response to a detection of a removal of the first power receiver from a power transfer position of the power transmission apparatus.

Specifically, the presence detector 801 may detect that a power receiver is present at a position where it can receive power from the power transmitter. It may further detect if this is removed from this position. This removal may for example be detected by a change in the electromagnetic environment, for example by the presence detector 801 detecting that an impedance of the transmitter coil 103 changes. As another example, the presence detector 801 may periodically generate a detection signal resulting in the power receiver briefly waking up and transmitting a power receiver identifier to the power transmitter. The detection signal may typically correspond to a wake-up signal (i.e. have the same parameters and in principle for the power receiver be indistinguishable from a wake-up signal) but it will be appreciated that in some embodiments the detection signal may have different properties than a wake-up signal. The presence detector 801 may check that this corresponds to the stored first power receiver identifier. If so, the presence detector 801 determines that the power receiver of the delayed power transfer is still present and if not it determines that there is no power receiver or that the one present is not the one associated with the delayed power transfer. In some embodiments, the approaches may be combined, e.g. the presence detector 801 may detect a change in impedance of the transmitter coil 103 and it may in response generate a wake-up signal to see if the correct power receiver identifier is received.

If the presence detector 801 detects that the power receiver of the delayed power transfer has been removed, it proceeds to invalidate the stored first power receiver identifier, e.g. by deleting this or by clearing a flag indicating that a delayed power transfer is pending. As another example, it may reset or stop the timer used to determine the time for the delayed power transfer.

In some embodiments, the presence detector 801 may not react immediately when an absence of the first power receiver is detected but may only proceed to invalidate the first power receiver identifier if the first power receiver is absent for more than a given time interval. The presence detector 801 may for example only invalidate the first power receiver identifier if the first power receiver (the one for which the delayed power transfer is pending) has been detected to be absent for duration which exceeds a given threshold value. In many embodiments, this threshold maybe, say, no less than 1, 2, 5, 10, 30, 60 minutes, or indeed in some embodiments no less than 2, 3 or 5 hours.

This may allow e.g. an appliance such as a coffee maker to be temporarily removed from the power transfer position of the power transmitter. For example, during cleaning or by accident, the appliance may briefly be moved from the power transfer position before being returned to this. The approach may allow this to happen without it affecting the setup of the delayed power transfer.

Indeed, in some embodiments, the power transmission apparatus may be arranged to perform a power transfer operation for another power receiver (i.e. a power receiver which is not the first power receiver, i.e. it is not the power receiver for which the delayed power transfer is pending) during such a time interval. Thus, in some embodiments, the power receiver for which the delayed power transfer has been set up, i.e. the first power receiver, may be removed from the power transfer position and replaced by another power receiver. The power transmission apparatus may detect that a new power receiver has been positioned on the power transfer position and it may proceed to initialize and perform a power transfer for this new power receiver. After this power transfer, the new power receiver may be removed and the first power receiver may be returned to the power transfer position. The presence detector 801 may then detect that the first power receiver has indeed been returned (e.g. by generating a wake-up signal and receiving a power receiver identifier) and thus may be ready for the delayed power transfer. If this has occurred within the allowed time interval, the presence detector 801 will not invalidate the stored first power receiver identifier, and thus will remain in a position where the delayed power transfer is still pending.

Such an approach may be described in more detail with respect to a scenario wherein a user sets up an appliance for a delayed power transfer, but then puts the appliance aside for a few moments to use the power transmitter with another appliance. When the user next puts the first appliance back on the power transmitter, it would be very convenient if the delayed power transfer would still be active, without the user having to think about again going through the steps of setting it up. The latter is easy to forget, and may result in not having freshly brewed coffee in the morning.

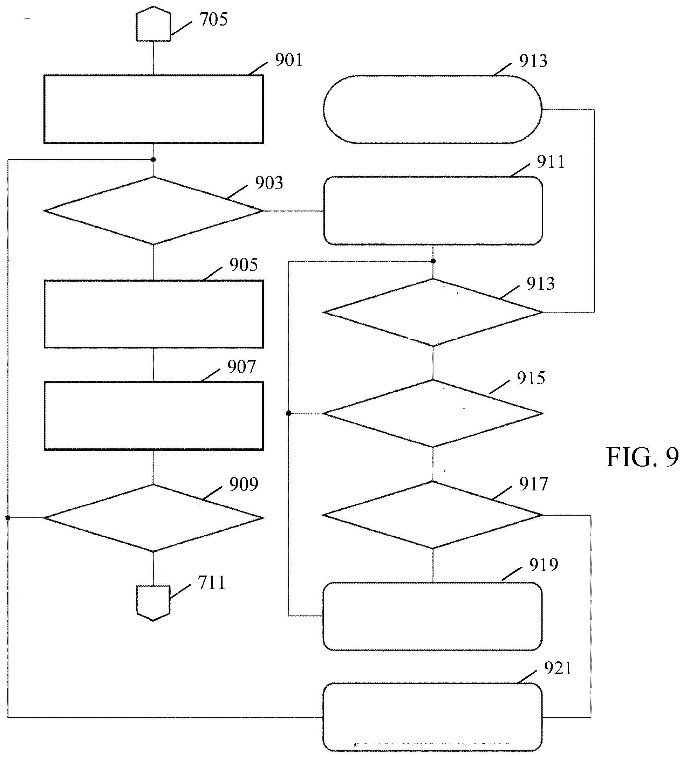

FIG. 9 illustrates an example of a flow chart for the operation of a power transmission apparatus which can support such operation. The process of FIG. 9 may e.g. be considered to replace steps 707 and 709 if FIG. 7.

In step 901, the power transmitter starts the countdown similar to step 707 of FIG. 7. In step 903, the power transmission apparatus verifies that the appliance is still present. The power transmitter can do this by, e.g., requesting the appliance's UID and comparing it to the UID that is associated with the timer. In step 905 the power transmitter optionally goes into standby. The power transmitter may wakes up from standby in step 907. This may e.g. be due to it being time for the delayed power transfer, due to a change in an impedance of the transmitter coil 103 (or of a dedicated communications antenna), or due to a user checking the power transmitter's status (e.g. using the power transmitter's user interface or using an Internet connection).

The power transmission apparatus then proceeds in step 909 to verify whether the timer has run down, i.e. whether the time of the delayed power transfer has occurred. If not, the power transmitter repeats steps 903 to 907. If the timer has indeed run down, it is time to start the delayed power transfer and the power transmission apparatus proceeds with step 711 of FIG. 7.

If in step 903, the power transmission apparatus detects that the appliance has been removed, it proceeds to step 911 where it starts a second timer to track the amount of time that the appliance can be absent before the presence detector 801 will invalidate the first power receiver identifier and thus cancel the delayed power transfer in step 913. This ensures that the second timer does not extend beyond the first timer (i.e. the second timer will always run down before the first timer; in a border case, this may even mean that the power transmitter immediately sets the second timer to its run down state before even starting it).

As long as the second timer is running, i.e, the allowable absence interval has not been exceeded, the power transmission apparatus, in step 915, checks whether the user has placed an appliance on the power transfer position for the power transmitter. If so, the power transmission apparatus, in step 917, checks whether it is the appliance that requested the delayed power transfer. This may be done by comparing the received UID to the stored UID. If it is another appliance, the power transmitter proceeds to service that appliance, and subsequently it waits until the user has removed this other appliance in step 919. When that happens, the power transmitter loops back to check the status of the second timer in step 911.

It will be appreciated that alternatively, the power transmission apparatus may associate an interrupt with the second counter running down, and it may invalidate the first power receiver identifier and cancel the delayed power transfer if the interrupt is triggered before the user takes the second appliance away.

If in step 917, the power transmission apparatus determines that the appliance of the delayed power transfer has been replaced, it may in step 921 inform the appliance of the scheduled delayed power transfer (including the fact that this is not due yet). The appliance can use this information to reconfirm the delayed power transfer to the user. The power transmission apparatus may then clear the second timer and loop back to step 903.

As previously mentioned, the power transmission apparatus may be implemented as part of the power transmitter 101, i.e. all the elements of FIG. 6 may be part of a single power transmitter.

However, it will be appreciated that the functionality of the power transmission apparatus may in some embodiments be distributed and some elements maybe external to the power transmitter. For example, in some embodiments, the functionality may be distributed over a plurality of power transmitters. E.g. the first receiver 601 and the store 603 may be part of a first power transmitter whereas the second receiver 607 and the verification processor 609 may be part of a second power transmitter. This may for example allow the delayed power transfer to be set up with a first power transmitter but with the delayed power transfer actually being performed by a second power transmitter.

Thus, in some scenarios, the power transmitter 101 may be part of a group of power transmitters that can share information about the appliances they are serving. In this case, the user could initiate the delayed power transfer on one of these power transmitters, and later move the appliance over to another power transmitter in the group. The power transmitter can share the information about the delayed power transfer such that the other power transmitter can take over the request. In some embodiments, this may be achieved by the UID and associated delayed power transfer values (such as the time of the delayed power transfer) may be shared or communicated between the power transmitters. This may result in a very convenient and intuitive user experience.

It will also be appreciated that in some embodiments, the comparison between the first power receiver identifier and the second power receiver identifier may be implemented in the power receiver itself. Such a power receiver may correspond to the power receiver of FIG. 5 and will be described with reference to this.

In the example, the power receiver comprises the power transfer controller 509 which is arranged to set up a delayed power transfer for the power receiver. This may specifically be done in response to specific user inputs, e.g. a user may enter the desired properties of the delayed power transfer operation (such as the time and the function) and the power transfer controller 509 may in response select appropriate parameters.

The power transfer controller 509 may as part of the setting up of the delayed power transfer transmit a power receiver identifier to the power transmitter. The power receiver identifier may specifically be transmitted using the load modulator 505. The power transfer controller 509 may then proceed to power down the power receiver and the system may enter the power down interval.

At the appropriate point in time, the power transmitter may generate a wake-up signal which may specifically provide some power to the power receiver resulting in this powering up at least some communication functionality. The power transfer controller 509 will proceed to control the powering up and specifically will initiate a communication exchange as the first stage of potentially setting up a power transfer operation.

The communication receiver 507 may as part of this process receive a power receiver identifier from the power transmitter if the wake-up signal is generated due to a delayed power transfer. Thus, in the case of the power transmitter initializing the delayed power transfer, the communication receiver 507 will receive the first power receiver identifier previously stored at the power transmitter.

The power receiver further comprises a power transfer initializer 511 (in FIG. 5 illustrated as part of the power transfer controller 509) which is arranged to initialize the delayed power transfer in response to the received first power receiver identifier matching a power receiver identifier for the power receiver.

Specifically, the power transfer initializer 511 may compare the received first power receiver identifier to the local power receiver identifier and if these match, it may proceed to setup a delayed power transfer using the appropriate parameters for this (whether locally retrieved or received from the power transmitter).

If the received power receiver identifier does not match the local power receiver identifier, the power receiver will not proceed to setup a delayed power transfer but may proceed to setup a new power transfer (including following the appropriate protocol for doing so, including e.g. executing a negotiation phase to determine power transfer parameters rather than use parameters previously established for a delayed power transfer).

It will be appreciated that as previously described, the comparison of the first power receiver identifier and the second power receiver identifier may in many embodiments be performed in the power transmitter. In such cases, the power transfer controller 509 may cause a local power receiver identifier to be transmitted to the power transmitter as part of the powering up. In such cases, the power receiver may receive a power receiver indication which is indicative of the power receiver identifier stored at the power transmitter (the first power receiver identifier) matching the receiver identifier for the power receiver which was sent as part of the powering up (the second power receiver identifier). The power transfer initializer 511 may in such embodiments use this identification directly rather than first compare it to a local power receiver identifiers.

Thus, it will be appreciated that in both examples, the power receiver may receive a power receiver indication which can indicate whether a power receiver identifier stored at the power transmitter matches the power receiver identifier for the power receiver. In some embodiments, this power receiver indication may directly be the stored power receiver identifier and this is compared to the local power receiver identifier to determine if it is indicative of a match or not. In other embodiments, the comparison may have been made at the power transmitter and the power receiver indication can be used directly without the need to compare it to a local power receiver identifier.

In many embodiments, the delayed power transfer and the first power receiver identifier may be received directly from the power receiver for which the delayed power transfer is being setup. Specifically, in many embodiments, the power receiver may comprise a user interface which allows a user to setup a delayed power transfer (e.g. by specifying a time at which coffee should be brewed). The resulting delayed power transfer parameters (or at least a desired time for the delayed power transfer) as well as the power receiver identifier may then be communicated to the power transmitter, e.g. using load modulation.

However, it will be appreciated that in other embodiments, the delayed power transfer may be setup from another source. For example, in some scenarios the power transmitter may be connected to the Internet and the user may directly control the setting up of a delayed power transfer via a remote user interface also accessing the Internet, such as e.g. an app on a mobile phone. This may in some embodiments only require that the app has information of a suitable power receiver identifier or that one is generated and also communicated to the power receiver. In such embodiments, the delayed power transfer operation previosly described can still be used and provide robust performance.

In yet another scenario, the power transmitter itself may have a user interface and this may directly be used to setup the delayed power transfer. In that case the user can program a delayed power transfer setting on the power transmitter. If the power transmitter has been associated with an appliance that is positioned well enough it can execute such delayed power transfer setting.

It will be appreciated that the above description for clarity has described embodiments of the invention with reference to different functional circuits, units and processors. However, it will be apparent that any suitable distribution of functionality between different functional circuits, units or processors may be used without detracting from the invention. For example, functionality illustrated to be performed by separate processors or controllers may be performed by the same processor or controllers. Hence, references to specific functional units or circuits are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus references to "a", "an", "first", "second" etc. do not preclude a plurality. Reference signs in the claims are provided merely as a clarifying example shall not be construed as limiting the scope of the claims in any way.

## Claims

1. A power transmission apparatus for a wireless inductive power transfer system comprising:
a first receiver (601) for receiving a first power receiver identifier and a request for delayed power transfer for a first power receiver;
a store (603) for storing the first power receiver identifier;
a power transfer controller (605) arranged to generate a wireless inductive wake-up signal at a requested time for the delayed power transfer;
a second receiver (607) for receiving a second power receiver identifier from a second power receiver receiving the wake-up signal; and
a processor (609) for rejecting the delayed power transfer in response to a comparison of the first power receiver identifier and the second power receiver identifier.

2. The power transmission apparatus of claim 1 further comprising a transmitter (611) for transmitting a match indication to the second power receiver in response to the controller detecting a match between the first power receiver identifier and the second power receiver identifier.

3. The power transmission apparatus of claim 1 or 2 further comprising a presence detector (801) arranged to invalidate the stored first power receiver identifier in response to a detection of a removal of the first power receiver from a power transfer position.

4. The power transmission apparatus of claim 3 wherein the presence detector (801) is arranged to invalidate the stored first power receiver identifier only if the first power receiver is absent for more than a first time interval.

5. The power transmission apparatus of claim 4 wherein the wireless power transfer apparatus is arranged to perform a power transfer operation for another power receiver during the first time interval.

6. The power transmission apparatus of any of claims 3-5 wherein the presence detector (801) is arranged to repeatedly generate a detection signal and to determine that the first power receiver is present at the power transfer position in response to a detection that a power receiver identifier received in response to the detection signal matches the first power receiver identifier.

7. The power transmission apparatus of any previous claim wherein the first receiver (601) is arranged to receive power transfer parameters for the delayed power transfer; the store (603) is arranged to store the power transfer parameters; and further comprising a transmitter (611) for transmitting the power transfer parameters to the second power receiver in response to the processor (609) detecting a match between the first power receiver identifier and the second power receiver identifier.

8. The power transmission apparatus of any previous claim wherein the first receiver (601) is arranged to receive the first power receiver identifier and the request for the delayed power transfer from the first power receiver.

9. The power transmission apparatus of any previous claim wherein the wireless inductive power transfer apparatus is a wireless power transmitter.

10. A power receiver for a wireless power transfer system, the power receiver comprising:
a power up controller (509) arranged to power up the power receiver in response to a wake-up signal from a power transmitter;
a receiver (507) for receiving a power receiver indication from the power transmitter, the power receiver indication being indicative of a stored power receiver identifier for a delayed power transfer;
a power transfer initializer (509) for initializing the delayed power transfer in response to the power receiver indication being indicative of the stored power receiver identifier matching a power receiver identifier for the power receiver.

11. The power receiver of claim 10 further comprising a store and wherein the power transfer controller (509) is arranged to store power transfer parameters for the delayed power transfer in the store; and the power transfer initializer (511) is arranged to retrieve the stored power transfer parameters and to initialize the delayed power transfer using the retrieved stored power transfer parameters if the power receiver indication is indicative of the stored power receiver identifier matching a power receiver identifier for the power receiver.

12. The power receiver of claim 11 wherein the power transfer initializer (511) is arranged to initialize a power transfer not using the stored power transfer parameters if no power receiver indication indicative of the stored power receiver identifier matching the power receiver identifier for the power receiver is received.

13. A wireless inductive power transfer system comprising a first power receiver and a power transfer apparatus comprising:
a first receiver (601) for receiving a first power receiver identifier and a request for delayed power transfer for a first power receiver,
a store (603) for storing the first power receiver identifier, and
a power transfer controller (605) arranged to generate a wireless inductive wake-up signal at a requested time for the delayed power transfer;
and the wireless inductive power transfer system comprises:
a second receiver (603) for receiving a second power receiver identifier from a second power receiver receiving the wake-up signal; and
a processor (609) for rejecting the delayed power transfer in response to a comparison of the first power receiver identifier and the second power receiver identifier.

14. A method of operation for a power transmission apparatus of a wireless inductive power transfer system, the method comprising:
receiving a first power receiver identifier and a request for delayed power transfer for a first power receiver;
storing the first power receiver identifier;
generating a wireless inductive wake-up signal at a requested time for the delayed power transfer;
receiving a second power receiver identifier from a second power receiver receiving the wake-up signal; and
rejecting the delayed power transfer in response to a comparison of the first power receiver identifier and the second power receiver identifier.

15. A method of operation for power receiver of a wireless power transfer system, the method comprising:
powering up the power receiver in response to a wake-up signal from a power transmitter;
receiving a power receiver indication from the power transmitter, the power receiver indication being indicative of a stored power receiver identifier for a delayed power transfer;
initializing the delayed power transfer in response to the power receiver indication being indicative of the stored power receiver identifier matching a power receiver identifier for the power receiver.
